# EUROPEAN PATENT APPLICATION

(11) **EP 1 898 559 A2**
(43) Date of publication of application: **12.03.2008**
(21) Application number: 07007523.9
(22) Date of filing: 12.04.2007
(51) Int. Cl.: H04L 12/28

(54) **Wireless terminal making attachement decisions based upon mobility**

(30) Priority: 05.09.2006 US 842233 P; 27.12.2006 US
(71) Applicant: Broadcom Corporation, Irvine, CA 92617 (US)
(72) Inventor: Bennett, James D., San Clemente, CA 92672 (US)
(74) Representative: Jehle, Volker Armin

(57) **Abstract**

Wireless terminal making attachment decisions based upon mobility. A novel approach is presented by which a communication device, that is operable to associate with and connect with one or more types of WAPs (Wireless Access Points) (e.g., including wireless local area network access points, a WiMAX access points, or cellular access points), is designed to connect appropriately with a WAP based on the mobility of the communication device. For example, if a communication device is employed by a user in a fast moving vehicle, it would be more desirable to associate with a WAP that is operable to provide for a broader service range than a WAP whose service area is very localized and of which such a fast-moving user will soon be out of range. Alternatively, if a user is walking or relatively stationary, then associating with a WAP having a relatively much smaller service area could be sufficient.

## Description

### CROSS REFERENCE TO RELATED PATENTS/PATENT APPLICATIONS

### Provisional priority claims

The present U.S. Utility Patent Application claims priority pursuant to 35 U.S.C. § 119(e) to the following U.S. Provisional Patent Application which is hereby incorporated herein by reference in its entirety and made part of the present U.S. Utility Patent Application for all purposes:
1. U.S. Provisional Application Serial No. 60/842,233, entitled "Wireless terminal making attachment decisions based upon mobility," (Attorney Docket No. BP5452), filed 09/05/2006, pending.

### BACKGROUND OF THE INVENTION

### TECHNICAL FIELD OF THE INVENTION

The invention relates generally to communication networks; and, more particularly, it relates to selective connectivity between a wireless terminal and a selected WAP (Wireless Access Point) among a plurality of WAPs within such communication networks.

### DESCRIPTION OF RELATED ART

Communication systems are known to support wireless and wire lined communications between wireless and/or wire lined communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11, IEEE 802.16, Bluetooth®, advanced mobile phone services (AMPS), digital AMPS, global system for mobile communications (GSM), code division multiple access (CDMA), local multi-point distribution systems (LMDS), multi-channel-multi-point distribution systems (MMDS), and/or variations thereof.

Depending on the type of wireless communication system, a wireless communication device, such as a cellular telephone, two-way radio, personal digital assistant (PDA), personal computer (PC), laptop computer, home entertainment equipment, etc. communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver is coupled to the antenna and includes a low noise amplifier, one or more intermediate frequency stages, a filtering stage, and a data recovery stage. The low noise amplifier receives inbound RF signals via the antenna and amplifies then. The one or more intermediate frequency stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As is also known, the transmitter includes a data modulation stage, one or more intermediate frequency stages, and a power amplifier. The data modulation stage converts raw data into baseband signals in accordance with a particular wireless communication standard. The one or more intermediate frequency stages mix the baseband signals with one or more local oscillations to produce RF signals. The power amplifier amplifies the RF signals prior to transmission via an antenna.

In many systems, the transmitter will include one antenna for transmitting the RF signals, which are received by a single antenna, or multiple antennas, of a receiver. When the receiver includes two or more antennas, the receiver will select one of them to receive the incoming RF signals. In this instance, the wireless communication between the transmitter and receiver is a single-output-single-input (SISO) communication, even if the receiver includes multiple antennas that are used as diversity antennas (i.e., selecting one of them to receive the incoming RF signals). For SISO wireless communications, a transceiver includes one transmitter and one receiver. Currently, most wireless local area networks (WLAN) that are IEEE 802.11, 802.11a, 802,11b, or 802.11g employ SISO wireless communications.

Other types of wireless communications include single-input-multiple-output (SIMO), multiple-input-single-output (MISO), and multiple-input-multiple-output (MIMO). In a SIMO wireless communication, a single transmitter processes data into radio frequency signals that are transmitted to a receiver. The receiver includes two or more antennas and two or more receiver paths. Each of the antennas receives the RF signals and provides them to a corresponding receiver path (e.g., LNA, down conversion module, filters, and ADCs). Each of the receiver paths processes the received RF signals to produce digital signals, which are combined and then processed to recapture the transmitted data.

For a multiple-input-single-output (MISO) wireless communication, the transmitter includes two or more transmission paths (e.g., digital to analog converter, filters, up-conversion module, and a power amplifier) that each converts a corresponding portion of baseband signals into RF signals, which are transmitted via corresponding antennas to a receiver. The receiver includes a single receiver path that receives the multiple RF signals from the transmitter. In this instance, the receiver uses beam forming to combine the multiple RF signals into one signal for processing.

For a multiple-input-multiple-output (MIMO) wireless communication, the transmitter and receiver each include multiple paths. In such a communication, the transmitter parallel processes data using a spatial and time encoding function to produce two or more streams of data. The transmitter includes multiple transmission paths to convert each stream of data into multiple RF signals. The receiver receives the multiple RF signals via multiple receiver paths that recapture the streams of data utilizing a spatial and time decoding function. The recaptured streams of data are combined and subsequently processed to recover the original data.

Generally speaking, a communication device can be implemented to connect to a communication network via any one of a number of possible WAPs (Wireless Access Points). One of the possible deleterious effects that may arise within such communication systems includes the situation when a communication device is mobile. For example, when a user is employing a communication device, that user is sometimes stationary, sometimes moving slowly, sometimes moving fast, and so on. Depending on the mobility of the communication device or the user employing that communication device, certain of the WAPs can certainly be less than ideal with which to connect. As one possible example, a communication device can be employed by a user in a relatively fast moving vehicle (e.g., a car, train, or bus), and yet the communication device may detect and undesirably try to connect to a WAP whose service area is relatively localized. If the communication device connects to such a WAP, then as the user and the communication device move outside of that WAP's service area, communications will be lost or suffer significantly with respect to performance.

Further limitations and disadvantages of conventional and traditional approaches will become apparent to one of ordinary skill in the art through comparison of such systems with the present invention.

### BRIEF SUMMARY OF THE INVENTION

The present invention is directed to apparatus and methods of operation that are further described in the following Brief Description of the Several Views of the Drawings, the Detailed Description of the Invention, and the claims.

According to an aspect of the invention, a wireless terminal is provided in a packet switched communication network, the packet switched communication network including a plurality of wireless access points (WAPs), the wireless terminal comprising:
a radio that:
   detects the plurality of WAPs; and
   connects to a communication network via at least one WAP within the plurality of WAPs; and wherein:
when a rate of change of position of the wireless terminal with respect to a first WAP within the plurality of WAPs is less than a threshold, the radio connects to the communication network via the first WAP; and
when the rate of change of position of the wireless terminal with respect to the first WAP within the plurality of WAPs is greater than the threshold, the radio connects to the communication network via a second WAP within the plurality of WAPs.

Advantageously:
one WAP within the plurality of WAPs is a wireless local area network access point that is compatible with IEEE 802.11 standard or a WiMAX access point that is compatible with IEEE 802.16 standard.

Advantageously:
the threshold is a first threshold; and
when the rate of change of position of the wireless terminal with respect to the first WAP within the plurality of WAPs is less than the first threshold and a distance between the wireless terminal and the first WAP is less than a second threshold, the radio connects to the communication network via the first WAP.

Advantageously:
the threshold is a first threshold;
the radio determines a corresponding signal strength for signal transmission or signal reception via each communication link between the radio and each WAP within the plurality of WAPs;
the plurality of WAPs includes a plurality of unavailable WAPs and a plurality of available WAPs;
if a signal strength of a communication link between the radio and a corresponding WAP is less than a second threshold, then that corresponding WAP is included within the plurality of unavailable WAPs;
if a signal strength of a communication link between the radio and a corresponding WAP is greater than or equal to the second threshold, then that corresponding WAP is included within the plurality of available WAPs; and
among the plurality of unavailable WAPs and the plurality of available WAPs, the radio is enabled to connect to the communication network via only the plurality of available WAPs.

Advantageously:
the rate of change of position of the wireless terminal with respect to the first WAP within the plurality of WAPs is a velocity or an acceleration.

Advantageously:
the radio connects automatically to the communication network via one WAP within the plurality of WAPs.

Advantageously, the wireless terminal further comprises:
a user interface that provides information to and receives input from a user; and wherein:
   the wireless terminal presents a connection authorization request to the user via the user interface; and
   the radio connects to the communication network via one WAP within the plurality of WAPs when the user authorizes the connection authorization request via the user interface.

Advantageously:
the threshold is a first threshold;
the radio transmits a first packet to the first WAP;
the first WAP transmits a second packet to the radio;
based on the first packet and the second packet, the radio determines a communication link quality between the radio and the first WAP;
when the communication link quality is greater than or equal to a second threshold, the radio connects to the communication network via the first WAP; and
when the communication link quality is less than the second threshold, the radio connects to the communication network via the second WAP or another WAP within the plurality of WAPs.

Advantageously:
the threshold is a first threshold;
the radio transmits a corresponding first packet to each WAP within the plurality of WAPs;
each WAP transmits a corresponding second packet to the radio; and
based on each of the corresponding first packets and each of the corresponding second packets, the radio determines a plurality of link qualities that corresponds to a plurality of links between the radio and each respective WAP within the plurality of WAPs;
the plurality of WAPs includes a plurality of unavailable WAPs and a plurality of available WAPs;
those WAPs whose corresponding link has a communication link quality greater than or equal to a second threshold are included within the plurality of available WAPs;
those WAPs whose corresponding communication link has a communication link quality less than the second threshold are included within the plurality of unavailable WAPs; and
among the plurality of unavailable WAPs and the plurality of available WAPs, the radio connects to the communication network via only the plurality of available WAPs.

Advantageously:
the plurality of WAPs includes a plurality of unavailable WAPs and a plurality of available WAPs;
based on a history of connectivity between the radio and the plurality of WAPs, WAPs with which the radio has previously connected are included within the plurality of available WAPs;
based on the history of connectivity between the radio and the plurality of WAPs, WAPs with which the radio has not previously connected are included within the plurality of unavailable WAPs; and
among the plurality of unavailable WAPs and the plurality of available WAPs, the radio is enabled to connect to the communication network via only the plurality of available WAPs.

Advantageously, the wireless terminal further comprises:
a user interface that provides information to and receives input from a user; and wherein:
   the plurality of WAPs includes a plurality of unavailable WAPs and a plurality of available WAPs;
   based on a history of connectivity between the radio and the plurality of WAPs, WAPs with which the radio has previously connected are included within the plurality of available WAPs;
   based on the history of connectivity between the radio and the plurality of WAPs, WAPs with which the radio has not previously connected are included within the plurality of unavailable WAPs; and
   among the plurality of unavailable WAPs and the plurality of available WAPs, only the plurality of available WAPs are presented to the user via the user interface, and the radio is enabled to connect to the communication network via only the plurality of available WAPs.

According to an aspect of the invention, a wireless terminal is provided in a packet switched communication network, the packet switched communication network including a plurality of wireless access points (WAPs), the wireless terminal comprising:
a radio that:
   detects the plurality of WAPs; and
   connects to a communication network via at least one WAP within the plurality of WAPs; and wherein:
based on a first mobility of the wireless terminal with respect to a first WAP within the plurality of WAPs and a second mobility of the wireless terminal with respect to a second WAP within the plurality of WAPs, the radio selectively connects to the communication network via either the first WAP or the second WAP.

Advantageously:
one WAP within the plurality of WAPs is a wireless local area network access point that is compatible with IEEE 802.11 standard or a WiMAX access point that is compatible with IEEE 802.16 standard.

Advantageously:
the first mobility is a first velocity of the wireless terminal with respect to the first WAP or a first acceleration of the wireless terminal with respect to the first WAP; and
the second mobility is a second velocity of the wireless terminal with respect to the second WAP or a second acceleration of the wireless terminal with respect to the second WAP.

Advantageously,
the radio:
   determines a first distance between the wireless terminal and the first WAP; and
   determines a second distance between the wireless terminal and the second WAP; and
based on the first mobility, the second mobility, the first distance, and the second distance, the radio selectively connects to the communication network via either the first WAP or the second WAP.

Advantageously:
the radio:
   determines a first communication link quality of a first communication link between the wireless terminal and the first WAP; and
   determines a second communication link quality of a second communication link between the wireless terminal and the second WAP; and
based on the first mobility, the second mobility, the first communication link quality and the second communication link quality, the radio selectively connects to the communication network via either the first WAP or the second WAP.

Advantageously, the wireless terminal further comprises:
a user interface that provides information to and receives input from a user; and wherein:
   the wireless terminal presents a connection authorization request to the user via the user interface; and
   the radio connects to the communication network via one WAP within the plurality of WAPs when the user authorizes the connection authorization request via the user interface.

According to an aspect of the invention, a method is provided performed by a wireless terminal in a packet switched communication network, the packet switched communication network including a plurality of wireless access points (WAPs), the method comprising:
detecting the plurality of WAPs;
determining a first mobility of the wireless terminal with respect to a first WAP within the plurality of WAPs;
determining a second mobility of the wireless terminal with respect to a second WAP within the plurality of WAPs; and
based on the first mobility and the second mobility, selectively connecting the wireless terminal to a communication network via either the first WAP or the second WAP.

Advantageously:
one WAP within the plurality of WAPs is a wireless local area network access point that is compatible with IEEE 802.11 standard or a WiMAX access point that is compatible with IEEE 802.16 standard.

Advantageously:
the first mobility is a first velocity of the wireless terminal with respect to the first WAP or a first acceleration of the wireless terminal with respect to the first WAP; and
the second mobility is a second velocity of the wireless terminal with respect to the second WAP or a second acceleration of the wireless terminal with respect to the second WAP.

Advantageously, the method further comprises:
determining a first distance between the wireless terminal and the first WAP;
determining a second distance between the wireless terminal and the second WAP; and
based on the first mobility, the second mobility, the first distance, and the second distance, selectively connecting the wireless terminal to a communication network via either the first WAP or the second WAP.

Advantageously, the method further comprises:
determining a first communication link quality of a first communication link between the wireless terminal and the first WAP;
determining a second communication link quality of a second communication link between the wireless terminal and the second WAP; and
based on the first mobility, the second mobility, the first communication link quality, and the second communication link quality, selectively connecting the wireless terminal to a communication network via either the first WAP or the second WAP.

Advantageously, the method further comprises:
presenting a connection authorization request to a user; and
selectively connecting the wireless terminal to the communication network via either the first WAP or the second WAP when the user authorizes the connection authorization request.

Other features and advantages of the present invention will become apparent from the following detailed description of the invention made with reference to the accompanying drawings.

### BRIEF DESCRIPTION OF THE SEVERAL VIEWS OF THE DRAWINGS

FIG. 1 is a diagram showing an embodiment of a wireless communication system.
FIG. 2 is a diagram showing an embodiment of a wireless communication device.
FIG. 3 is a diagram showing an embodiment of a communication system that includes a wireless terminal, whose position changes as a function of time, and a plurality of WAPs.
FIG. 4 is a diagram showing an embodiment of a communication system that includes a wireless terminal that is operable to determine communication link quality across a plurality of communication links between itself and a plurality of WAPs.
FIG. 5 is a diagram showing an embodiment of a communication system that includes a wireless terminal that is operable to determine signal strength across a plurality of communication links between itself and a plurality of WAPs.
FIG. 6 is a diagram showing an embodiment of a communication system that includes a wireless terminal and a plurality of WAPs that are operable to support bi-directional communication there between that can be employed for determining signal strength, communication link quality, or other operational and performance measures.
FIG. 7 is a diagram of a communication system that includes a variety of different users and each user's respective mobility with respect to at least one WAP.
FIG. 8 is a diagram showing an embodiment of categorization of a plurality of WAPs into a plurality of available WAPs and a plurality of unavailable WAPs.
FIG. 9 is a diagram showing another embodiment of categorization of a plurality of WAPs into a plurality of available WAPs and a plurality of unavailable WAPs.
FIG. 10 is a diagram showing an embodiment of interfacing between a user and a wireless terminal.
FIG. 11, FIG. 12, FIG. 13, FIG. 14, and FIG. 15 are diagrams showing embodiments of methods for selectively connecting a wireless terminal to a WAP.

### DETAILED DESCRIPTION OF THE INVENTION

A novel approach is presented by which a wireless terminal selects one WAP (Wireless Access Point) from among a plurality of WAPs, and the wireless terminal connects to a communication network of interest via that selected WAP. In some embodiments, the communication network of interest is the Internet itself. The communication network can be a packet switched communication network. Based on the mobility of the wireless terminal, the wireless terminal selects an appropriate WAP through which to achieve a pathway to the communication network of interest. There may be instances where a number of available WAPs are detected by the wireless terminal, and the wireless terminal may even be able to associate with many of those detected WAPs, but the wireless terminal appropriately selects one of the WAPs as being more ideal than the other WAPs through which to connect to the communication network.

Additional considerations besides only mobility of the wireless terminal can also be employed in the decision making of through which WAP the wireless terminal should connect to access the communication network; some of these considerations can include distance between the wireless terminal and the WAPs, the signal strength or signal quality provided via the connection between the wireless terminal and the WAPs, the means of communication (e.g., protocol, standard, or other parameters), the modulation type, code rate, and/or any other parameter that governs the communication link between the wireless terminal and the WAPs.

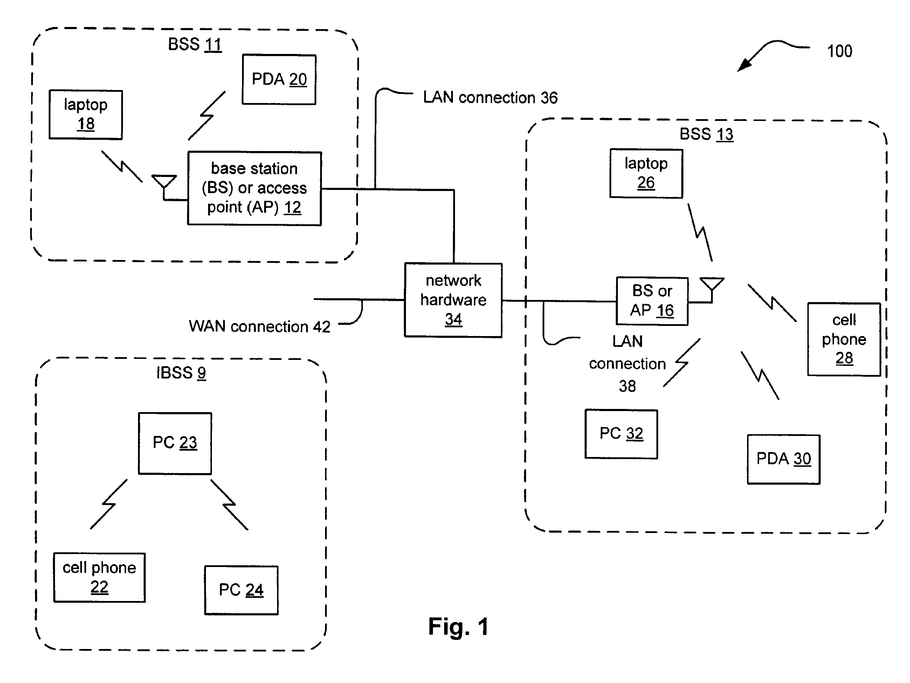

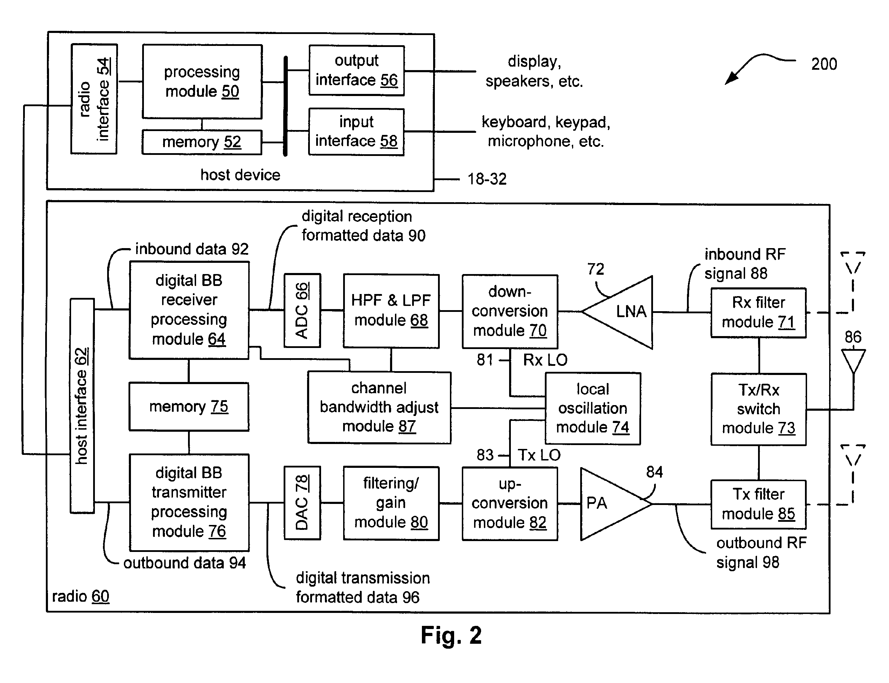

FIG. 1 is a diagram showing an embodiment of a communication system 100 that includes a plurality of base stations and/or access points 12, 16, a plurality of wireless communication devices 18-32 and a network hardware component 34. Note that the network hardware 34, which may be a router, switch, bridge, modem, system controller, etc. provides a wide area network connection 42 for the communication system 100. Further note that the wireless communication devices 18-32 may be laptop host computers 18 and 26, personal digital assistant hosts 20 and 30, personal computer hosts 24 and 32 and/or cellular telephone hosts 22 and 28. The details of the wireless communication devices will be described in greater detail with reference to FIG. 2.

Wireless communication devices 22, 23, and 24 are located within an independent basic service set (IBSS) area and communicate directly (i.e., point to point). In this configuration, these devices 22, 23, and 24 may only communicate with each other. To communicate with other wireless communication devices within the communication system 100 or to communicate outside of the communication system 100, the devices 22, 23, and/or 24 need to affiliate with one of the base stations or access points 12 or 16.

The base stations or access points 12, 16 are located within basic service set (BSS) areas 11 and 13, respectively, and are coupled to the network hardware 34 via local area network connections 36, 38. Such a connection provides the base station or access point 12 16 with connectivity to other devices within the communication system 100 and provides connectivity to other networks via the WAN connection 42. To communicate with the wireless communication devices within its BSS 11 or 13, each of the base stations or access points 12-16 has an associated antenna or antenna array. For instance, base station or access point 12 wirelessly communicates with wireless communication devices 18 and 20 while base station or access point 16 wirelessly communicates with wireless communication devices 26 - 32. Typically, the wireless communication devices register with a particular base station or access point 12, 16 to receive services from the communication system 100.

Typically, base stations are used for cellular telephone systems and like-type systems, while access points are used for in-home or in-building wireless networks (e.g., IEEE 802.11, IEEE 802.16, and versions thereof, Bluetooth®, and/or any other type of radio frequency based network protocol). Regardless of the particular type of communication system, each wireless communication device includes a built-in radio and/or is coupled to a radio.

FIG. 2 is a diagram showing an embodiment of a wireless communication device 200 that includes the host device 18-32 and an associated radio 60. For cellular telephone hosts, the radio 60 is a built-in component. For personal digital assistants hosts, laptop hosts, and/or personal computer hosts, the radio 60 may be built-in or an externally coupled component.

As illustrated, the host device 18-32 includes a processing module 50, memory 52, a radio interface 54, an input interface 58, and an output interface 56. The processing module 50 and memory 52 execute the corresponding instructions that are typically done by the host device. For example, for a cellular telephone host device, the processing module 50 performs the corresponding communication functions in accordance with a particular cellular telephone standard.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output display device such as a display, monitor, speakers, etc. such that the received data may be displayed. The radio interface 54 also provides data from the processing module 50 to the radio 60. The processing module 50 may receive the outbound data from an input device such as a keyboard, keypad, microphone, etc. via the input interface 58 or generate the data itself. For data received via the input interface 58, the processing module 50 may perform a corresponding host function on the data and/or route it to the radio 60 via the radio interface 54.

Radio 60 includes a host interface 62, digital receiver processing module 64, an analog-to-digital converter 66, a high pass and low pass filter module 68, an IF mixing down conversion stage 70, a receiver filter 71, a low noise amplifier 72, a transmitter/receiver switch 73, a local oscillation module 74, memory 75, a digital transmitter processing module 76, a digital-to-analog converter 78, a filtering/gain module 80, an IF mixing up conversion stage 82, a power amplifier 84, a transmitter filter module 85, a channel bandwidth adjust module 87, and an antenna 86. The antenna 86 may be a single antenna that is shared by the transmit and receive paths as regulated by the Tx/Rx switch 73, or may include separate antennas for the transmit path and receive path. The antenna implementation will depend on the particular standard to which the wireless communication device 200 is compliant.

The digital receiver processing module 64 and the digital transmitter processing module 76, in combination with operational instructions stored in memory 75, execute digital receiver functions and digital transmitter functions, respectively. The digital receiver functions include, but are not limited to, digital intermediate frequency to baseband conversion, demodulation, constellation de-mapping, decoding, and/or descrambling. The digital transmitter functions include, but are not limited to, scrambling, encoding, constellation mapping, modulation, and/or digital baseband to IF conversion. The digital receiver and transmitter processing modules 64 and 76 may be implemented using a shared processing device, individual processing devices, or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 75 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 64 and/or 76 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In operation, the radio 60 receives outbound data 94 from the host device via the host interface 62. The host interface 62 routes the outbound data 94 to the digital transmitter processing module 76, which processes the outbound data 94 in accordance with a particular wireless communication standard (e.g., IEEE 802.11, IEEE 802.16, Bluetooth®, etc.) to produce outbound baseband signals 96. The outbound baseband signals 96 will be digital base-band signals (e.g., have a zero IF) or digital low IF signals, where the low IF typically will be in the frequency range of one hundred kHz (kilo-Hertz) to a few MHz (Mega-Hertz).

The digital-to-analog converter 78 converts the outbound baseband signals 96 from the digital domain to the analog domain. The filtering/gain module 80 filters and/or adjusts the gain of the analog signals prior to providing it to the IF mixing stage 82. The IF mixing stage 82 converts the analog baseband or low IF signals into RF signals based on a transmitter local oscillation 83 provided by local oscillation module 74. The power amplifier 84 amplifies the RF signals to produce outbound RF signals 98, which are filtered by the transmitter filter module 85. The antenna 86 transmits the outbound RF signals 98 to a targeted device such as a base station, an access point and/or another wireless communication device 200.

The radio 60 also receives inbound RF signals 88 via the antenna 86, which were transmitted by a base station, an access point, or another wireless communication device. The antenna 86 provides the inbound RF signals 88 to the receiver filter module 71 via the Tx/Rx switch 73, where the Rx filter 71 bandpass filters the inbound RF signals 88. The Rx filter 71 provides the filtered RF signals to low noise amplifier 72, which amplifies the signals 88 to produce an amplified inbound RF signals. The low noise amplifier 72 provides the amplified inbound RF signals to the IF mixing module 70, which directly converts the amplified inbound RF signals into an inbound low IF signals or baseband signals based on a receiver local oscillation 81 provided by local oscillation module 74. The down conversion module 70 provides the inbound low IF signals or baseband signals to the filtering/gain module 68. The high pass and low pass filter module 68 filters, based on settings provided by the channel bandwidth adjust module 87, the inbound low IF signals or the inbound baseband signals to produce filtered inbound signals.

The analog-to-digital converter 66 converts the filtered inbound signals from the analog domain to the digital domain to produce inbound baseband signals 90, where the inbound baseband signals 90 will be digital base-band signals or digital low IF signals, where the low IF typically will be in the frequency range of one hundred kHz to a few MHz.. The digital receiver processing module 64, based on settings provided by the channel bandwidth adjust module 87, decodes, descrambles, de-maps, and/or demodulates the inbound baseband signals 90 to recapture inbound data 92 in accordance with the particular wireless communication standard being implemented by radio 60. The host interface 62 provides the recaptured inbound data 92 to the host device 18-32 via the radio interface 54.

As one of average skill in the art will appreciate, the wireless communication device 200 of FIG. 2 may be implemented using one or more integrated circuits. For example, the host device may be implemented on one integrated circuit, the digital receiver processing module 64, the digital transmitter processing module 76 and memory 75 may be implemented on a second integrated circuit, and the remaining components of the radio 60, less the antenna 86, may be implemented on a third integrated circuit. As an alternate example, the radio 60 may be implemented on a single integrated circuit. As yet another example, the processing module 50 of the host device and the digital receiver and transmitter processing modules 64 and 76 may be a common processing device implemented on a single integrated circuit. Further, the memory 52 and memory 75 may be implemented on a single integrated circuit and/or on the same integrated circuit as the common processing modules of processing module 50 and the digital receiver and transmitter processing module 64 and 76.

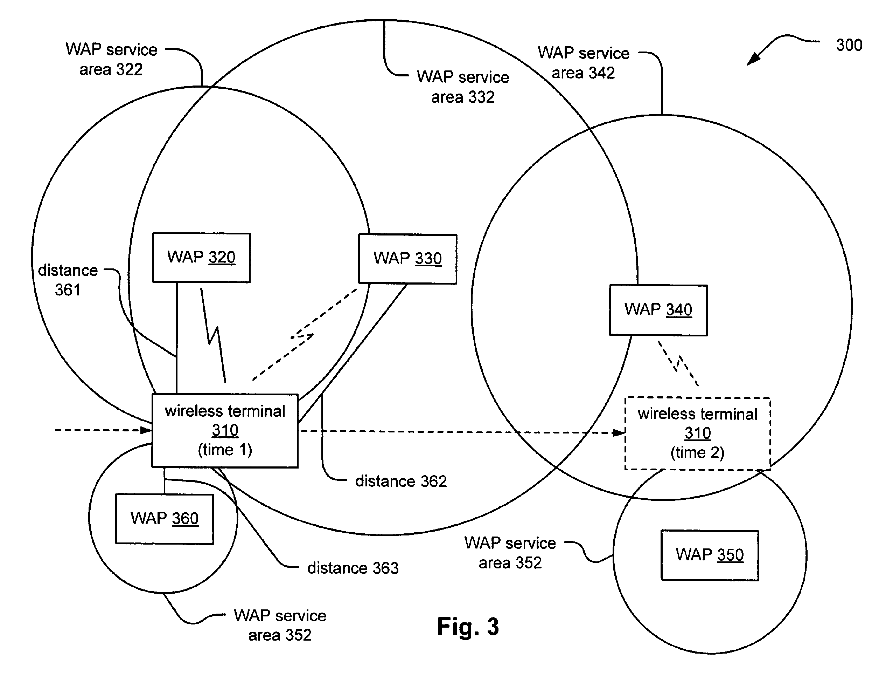

FIG. 3 is a diagram showing an embodiment of a communication system 300 that includes a wireless terminal 310, whose position changes as a function of time, and a plurality of WAPs. Specifically, a WAP 320 has a WAP service area 322, a WAP 330 has a WAP service area 332, and so on for each of a WAP 340, a WAP 350, and a WAP 360. Any of these WAPs can be one of a variety of WAPs, including a WAP that is operable to support communication via more than one standard, and/or protocol. For example, any one WAP can be a wireless local area network access point that is compatible with the IEEE 802.11 standard. Alternatively, any one WAP can be a WiMAX access point that is compatible with the IEEE 802.16 standard. In even other embodiments, any one of the WAPs can be a cellular WAP. The wireless terminal 310 can be implemented to connect to any of the WAPs within the communication system 300.

As can be seen, the wireless terminal 310 is in a first location at a time 1, and at a second location at a time 2. A rate of change of position of the wireless terminal 310 with respect to any one of the WAPs can be viewed as being a velocity (first order time derivative) or acceleration (second order time derivative). Also, the relative rate of change of the wireless terminal 310 with respect to each of the WAPs can be different. For example, the wireless terminal 310 has a first rate of change of position with respect to the WAP 360, and a second rate of change of position with respect to the WAP 340. Based on the mobility of the wireless terminal 310 with respect to any one of the WAPs or all of the WAPs, the wireless terminal 310 includes a radio that is operable to connect to a communication network via an appropriately selected WAP. For example, when considering a first WAP, then based on the mobility of the wireless terminal 310 with respect to that first WAP being less than a particular threshold (which can be predetermined, programmed, or adaptively determined), then the radio of the wireless terminal 310 connects to that first WAP. Alternatively, if the mobility of the wireless terminal 310 with respect to that first WAP being is greater than of equal to the threshold, then the wireless terminal 310 connects to the communication network via another one of the WAPs.

If desired, additional considerations can be made as well when determining with which WAP to connect. For example, a distance can be a secondary consideration. At time 1, there is a distance 361 between the wireless terminal 310 and the WAP 320, and there is a distance 362 between the wireless terminal 310 and the WAP 330. Therefore, both the mobility of the wireless terminal 310 with respect to a particular WAP and the distance between the wireless terminal 310 and a particular WAP can be employed to make association decisions for the wireless terminal 310. Analogously, additional considerations may also be added to the decision making regarding with which WAP to connect. For example, the type of communication supported by a particular WAP can be a further consideration (e.g., IEEE 802.11a, IEEE 802.11b, IEEE 802.11g, 802.11p, and so on).

Some examples can be considered that show how mobility can be employed are provided here. If a user employs a wireless terminal while stationary, then a WAP having a relatively smaller service area is probably sufficient than a WAP having a relatively larger service area, since the walking user would have a relatively small mobility with respect to any one WAP. Alternatively, for a user employing a wireless terminal in a vehicle (whose mobility would be relatively larger), then such a corresponding wireless terminal should connect to a WAP having a larger service area. In the user in a vehicle example, even though certain WAPs can be detected by that user's wireless terminal, some of them may be inappropriate with which to connect. Some of the WAPs, although detected, may have only a relatively small service area, and as such, would be less than ideal for a highly mobile wireless terminal to connect. In addition, with respect to the historical connectivity of the wireless terminal with one WAP, each WAP, or all of the WAPs, there may be some WAPs that are better or more ideal with which to connect.

It is also noted that the decision making processes regarding with which WAP to connect can be implemented such that they require the intervention of a user (e.g., approval and/or selection by a user) or the connection may be automatic.

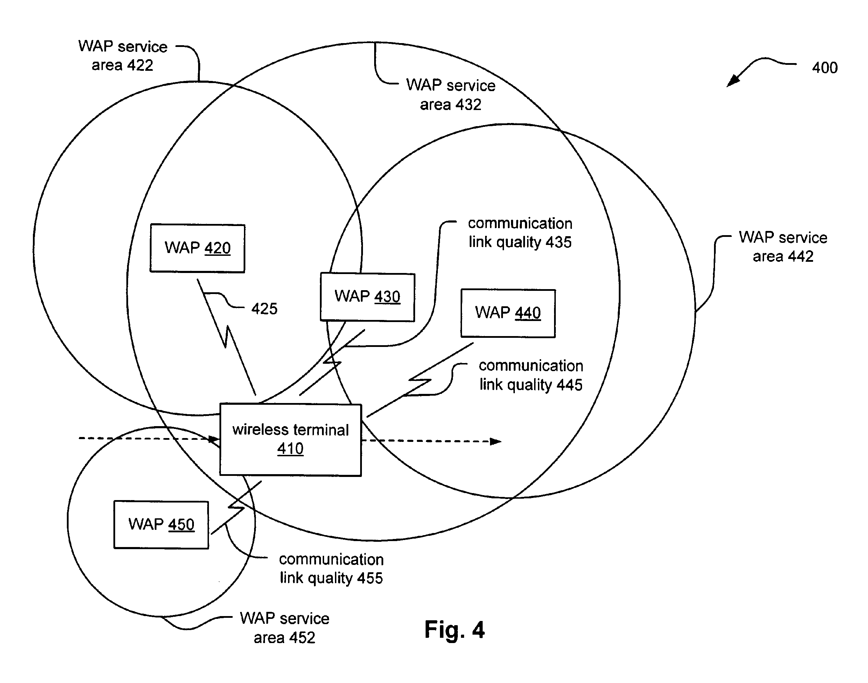

FIG. 4 is a diagram showing an embodiment of a communication system 400 that includes a wireless terminal 410 that is operable to determine communication link quality across a plurality of communication links between itself and a plurality of WAPs 420, 430, 440, and 450. The wireless terminal 410 is operable to acquire information related to the communication link quality between itself and each of the WAPs. This determination can be made by the wireless terminal 410, by any of the respective WAPs, or by cooperation between the wireless terminal 410 and any of the WAPs (i.e., in part by each device at each end of the communication link). For example, a communication link quality 425 corresponds to a communication link between the wireless terminal 410 and the WAP 420. Similar communication link qualities 435, 445, and 455 can be determined as corresponding to each of the communication links between each of the WAPs and the wireless terminal 410.

In embodiments where the wireless terminal 410 is mobile, the communication link quality of each communication link may also be dynamic. The wireless terminal 410 can be implemented to monitor these respective communication link qualities as well when the wireless terminal 410 is mobile.

Any one or more of these communication link qualities can be employed in the decision making regarding with which WAP the wireless terminal 410 should connect. Certain properties of a communication link quality can be selected and varied as desired in a particular application. For example, a communication link quality can include a signal to noise ratio (SNR), a degree of interference along that link such as inter-symbol-interference (ISI), a power quality, or other measurable quality. In addition, a communication link quality can correspond to one or more operational parameters of that communication link such as a code rate, a modulation type, or other operational parameter that governs communication via that communication link. For example, a lower code rate may be deemed to provide a better quality (i.e., because of the higher degree of redundancy) than a higher code rate across a given communication link when error correction capability is a quality measure. Alternatively, if throughput is a quality measure, then the higher code rate operational parameter could be deemed to be higher quality. As can be seen, a variety of quality measures can be employed, and the defining of what end of a spectrum is of higher quality can be very different in different applications.

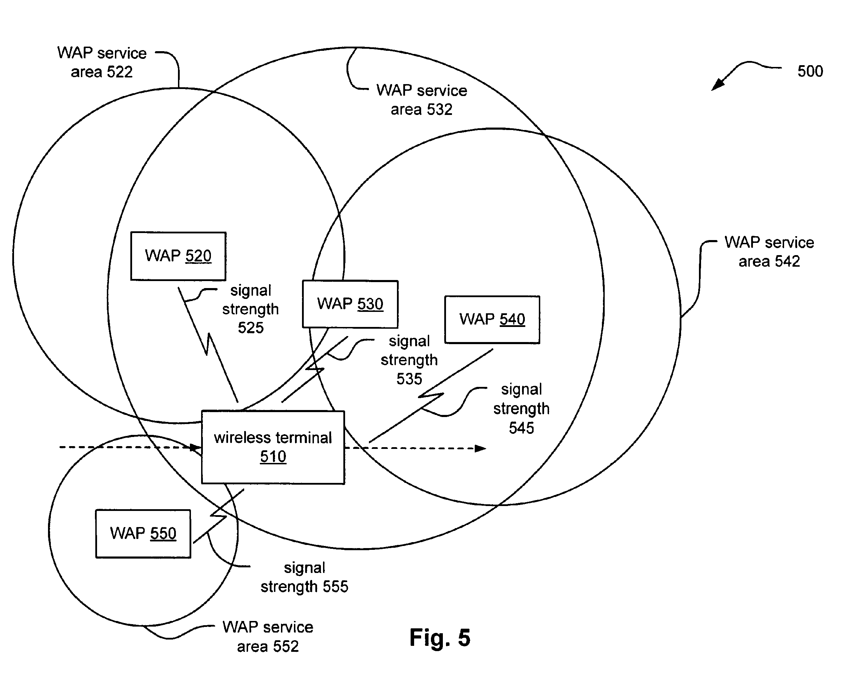

FIG. 5 is a diagram showing an embodiment of a communication system 500 that includes a wireless terminal 510 that is operable to determine signal strength across a plurality of communication links between itself and a plurality of WAPs 520, 530, 540, and 550.

The wireless terminal 510 is operable to acquire information related to the signal strength between itself and each of the WAPs. This determination can be made by the wireless terminal 510, by any of the respective WAPs, or by cooperation between the wireless terminal 510 and any of the WAPs (i.e., in part by each device at each end of the communication link). For example, a signal strength 525 corresponds to a communication link between the wireless terminal 510 and the WAP 520. Similar signal strengths 535, 545, and 555 can be determined as corresponding to each of the communication links between each of the WAPs and the wireless terminal 510. This embodiment depicts a specific measure (i.e., signal strength) along one or more of the communication links between the wireless terminal 510 and one or more of the respective WAPs as being employed in the decision making regarding with which WAP the wireless terminal 510 should connect.

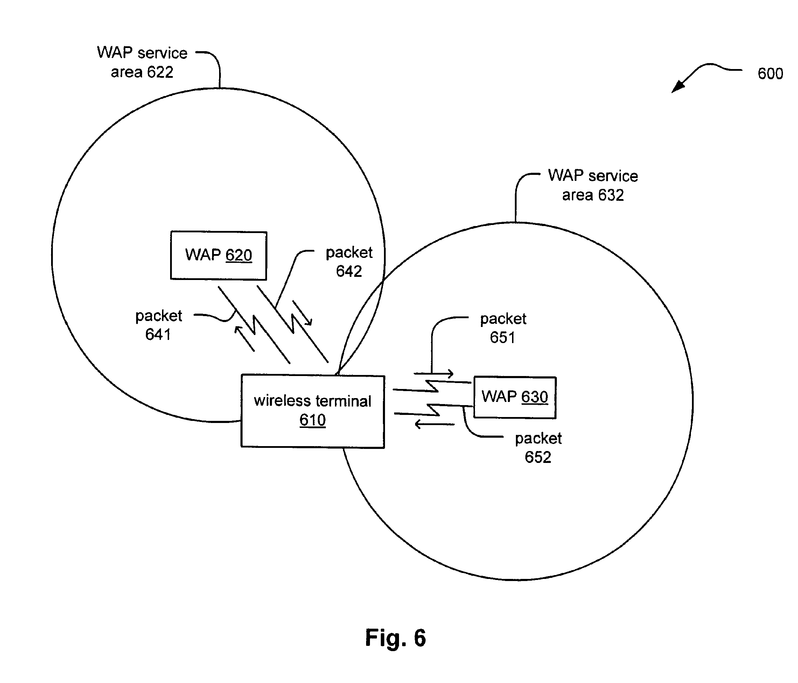

FIG. 6 is a diagram showing an embodiment of a communication system that includes a wireless terminal 610 and a plurality of WAPs (i.e., WAP 620 and WAP 630) that are operable to support bi-directional communication there between that can be employed for determining signal strength, communication link quality, or other operational and performance measures. In this embodiment, a first packet is transmitted in one direction along each communication link between the wireless terminal 610 and each WAP during a first time. Then, a second packet is transmitted in the opposite direction along each communication link between the wireless terminal 610 and each WAP during a second time. The first packet may be transmitted from the wireless terminal 610 to a WAP during the first time, and the second packet may be transmitted from that WAP to the wireless terminal 610 to a WAP during the second time. The converse may alternatively be employed. For example, the first packet may be transmitted from a WAP to the wireless terminal 610 during the first time, and the second packet may be transmitted from the wireless terminal 610 to that WAP during the second time.

Looking specifically at the diagram, a first packet 641 is transmitted in one direction along a communication link between the wireless terminal 610 and the WAP 620 during a first time, and a second packet 642 is transmitted in the opposite direction along the communication link between the WAP 620 and the wireless terminal 610 during a second time. Analogously, a first packet 651 is transmitted in one direction along a communication link between the wireless terminal 610 and the WAP 630 during a first time, and a second packet 652 is transmitted in the opposite direction along the communication link between the WAP 630 and the wireless terminal 610 during a second time.

Regardless of which packet transmission is first and which is second, a round trip communication between the wireless terminal 610 and each of the respective WAPs allows for an accurate determination of the signal strength, communication link quality, or other operational and performance measure of that corresponding communication link. This characterization can then be employed in the decision making processes regarding with which WAP the wireless terminal 610 should connect.

Using this bi-directional communication link characterization, then a device at one end of the communication link has knowledge of what is sent, and the device at the other end of the communication link will knowledge of what is received. Therefore, an accurate assessment of the various parameters of the communication link can be made. By using a bi-directional approach, then full information can be made available (i.e., what is sent and received in one direction, and what is sent and received in the other direction). Also, by using a bi-directional approach, then devices at both ends of the communication link can participate in the communication link characterization; for example, one device can perform a first portion of the characterization, and the other device can perform a second portion of the characterization.

In even another embodiment, a singular packet is only transmitted in one direction (e.g., from wireless terminal 610 to a WAP, or from that WAP to the wireless terminal 610), and the corresponding receiving device is operable to determine the signal strength, communication link quality, or other operational and performance measure of that corresponding communication link. While this uni-directional approach may be slightly less accurate, in some cases, than a system employing a bi-directional approach, it nevertheless shows how the characterization of the respective communication links, and their corresponding WAPs, within the communication system 600 can be achieved.

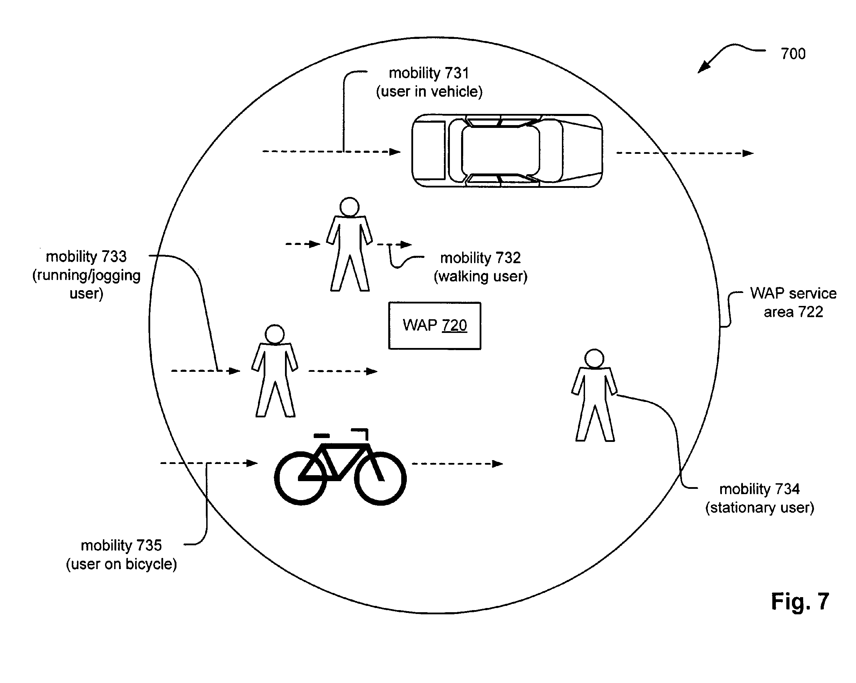

FIG. 7 is a diagram of a communication system 700 that includes a variety of different users and each user's respective mobility with respect to at least one WAP 720. The WAP 720 has a WAP service area 722 in which each of the wireless terminals employed by each of the users depicted can detect the WAP 720.

As can be seen, each of the wireless terminals employed by the various users has a different mobility with respect to the WAP 720. A running/jogging user has a mobility 733 with respect to the WAP 720 that is certainly relatively greater than a stationary user who has a mobility 734 with respect to the WAP 720 or a walking user who has a mobility 732 with respect to the WAP 720. However, a user in a vehicle most likely has a mobility 731 with respect to the WAP 720 that any of these other users. A user on a bicycle has a mobility 735 that probably lies somewhere within the spectrum of the mobility 731 (at a higher end of the spectrum) to the mobility 734 (at the lower end of the spectrum).

It is noted that there will most likely be a different likelihood for each of these users, in having a different mobility, that connecting to a network via the WAP 720 is a most ideal connectivity. For example, there may be another WAP that is preferable for certain of these users than the WAP 720 depicted. There may be instances for some of these users in which their respective wireless terminal in fact detects the WAP 720, but after processing that user's mobility with respect to the WAP 720, that wireless terminal does not include the WAP 720 within a group of available WAPs to which the wireless terminal can connect. However, this WAP 720 may meet the decision making criterion or criteria for connecting therewith.

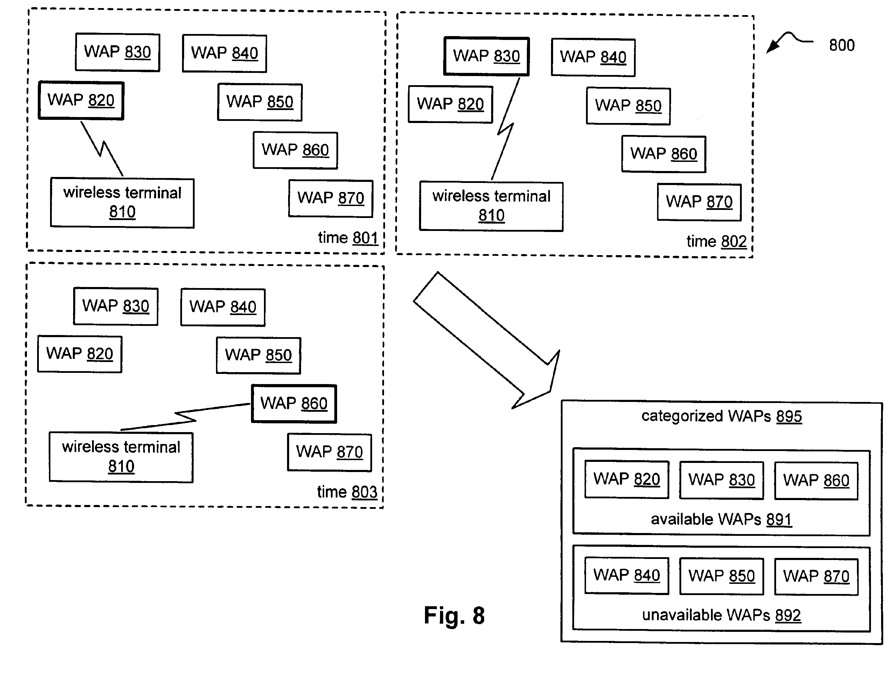

FIG. 8 is a diagram showing an embodiment of categorization 800 of a plurality of WAPs into a plurality of available WAPs 891 and a plurality of unavailable WAPs 892. During each of a time 801, a time 802, and a time 803, a wireless terminal 810 connects with a different WAP within a plurality of WAPs.

More specifically, the wireless terminal 810 can be implemented to detect each of the WAPs during each of these times 801, 802, and 803, and connect to a different WAP at each different time 802, 802, and 803 depending on the decision making criterion or criteria employed at that time. During each of these times 801, 802, and 803, the wireless terminal 810 develops a history of connectivity. Based on this history of connectivity, each WAP within the plurality of WAPs is then included within either the plurality of available WAPs 891 or the plurality of unavailable WAPs 892.

For example, during the time 801, the wireless terminal 810 connects to the WAP 820. During the time 802, the wireless terminal 810 connects to the WAP 830, and during the time 803, the wireless terminal 810 connects to the WAP 860. Therefore, because of this history of connectivity, each of the WAP 820, 820, and 860 is included in the plurality of available WAPs 891, and each of the WAP 840, 850, and 870 is included in the plurality of unavailable WAPs 892.

A memory, implemented within the wireless terminal 810, can be employed to store this history of connectivity and the categorization of the WAPs. Thereafter, based on this history of connectivity, and categorization of the plurality of the plurality of available WAPs 891 and the plurality of unavailable WAPs 892, then the wireless terminal 810 is operable to connect only to WAPs within the plurality of available WAPs 891. The categorization of each of the plurality of available WAPs 891 and the plurality of unavailable WAPs 892 can also updated at a later time. For example, the classification of any one WAP may change over time, and an updated categorization will capture that change in status.

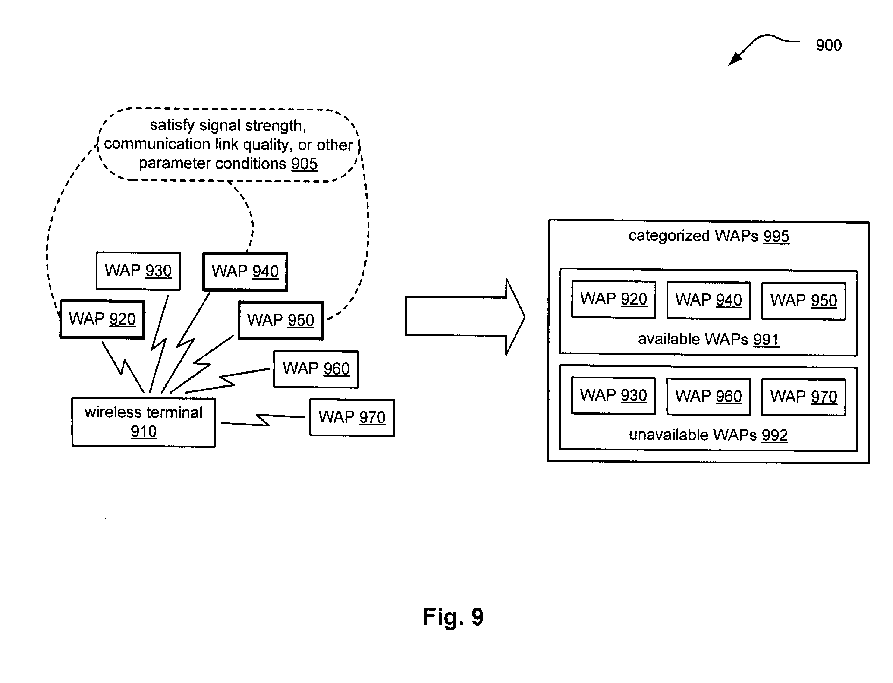

FIG. 9 is a diagram showing another embodiment of categorization 900 of a plurality of WAPs into a plurality of available WAPs 991 and a plurality of unavailable WAPs 992. Somewhat analogous to the embodiment of the previous diagram, this embodiment categorizes each of the WAPs into the plurality of available WAPs 991 or the plurality of unavailable WAPs 992. However, this embodiment does not directly employ the history of connectivity, but rather employs some parameter condition such communication link quality, signal strength, operational mode, or some other parameter condition as the divider of the WAPs into the plurality of available WAPs 991 or the plurality of unavailable WAPs 992. The wireless terminal 910 is operable to communicate with each of the WAPs 920, 930, 940, 950, 960, and 970 in any manner desired (e.g., simultaneously, successively, or in another manner) to assess one or more parameters that characterize each of the communication links between the wireless terminal 910 and each of the WAPs 920, 930, 940, 950, 960, and 970.

As shown in this embodiment, the WAPs 920, 940, and 950 are shown as satisfying or meeting the one or more parameter conditions that place these WAPs 920, 940, and 950 within the plurality of available WAPs 991. However, the WAPs 930, 960, and 970 are shown as not satisfying or meeting the one or more parameter conditions that place these WAPs 930, 960, and 970 within the plurality of unavailable WAPs 992.

As mentioned above with respect to other embodiments, the characterization of each individual WAP can change as a function of time, and certain WAPs that are included within the plurality of available WAPs 991 at a first time may be included within the plurality of unavailable WAPs 992 at a later time.

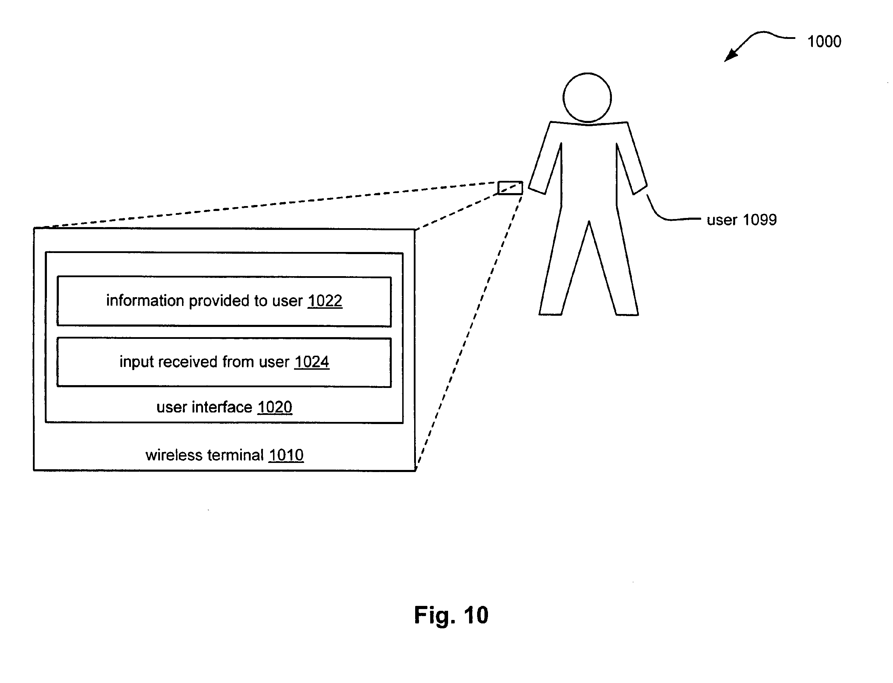

FIG. 10 is a diagram showing an embodiment of interfacing 1000 between a user 1099 and a wireless terminal 1010. The wireless terminal 1010 includes a user interface 1020 that is operable to provide information to the user 1099 (as shown by reference numeral 1022) and is operable to receive input from the user 1099 (as shown by reference numeral 1024).

Through this user interface 1020, the user 1099 has the opportunity to program and select certain of the decision making means (e.g., thresholds with respect to various of the parameters considered) that are employed to characterize any particular WAP as an available WAP or an unavailable WAP.

In addition, the user interface 1020 can be employed to display certain information to the user 1099, such as which WAPs are detected, which WAPs are available, which WAPs are deemed as being available, which WAPs are deemed as being unavailable, and so on. Even the information provided to the user 1099 via the user interface 1020 can be programmed or selected by the user 1099. For example, the user 1099 can select, via reference numeral 1024, that only available WAPs are displayed to the user 1099. For example, even if the wireless terminal 1010 detects a particular WAP, if that WAP does not meet the particular decision making criteria (e.g., such as the wireless terminal's mobility with respect to a WAP), then that particular WAP is not included within the plurality of available WAPs.

Any of a wide variety of types of a wireless terminal 1010 that is operable to connect to one or more types of WAPs can be employed in this embodiment, including PDAs, personal computers (including lap-top computers), other portable computer types, cell phones, and so on. Any wireless terminal 1010 that is operable to connect to one or more types of WAPs can include this interfacing 1000 to a user 1099. From this interfacing 1000, the user can then select any one or more of the constraints (e.g., thresholds) employed to make decisions regarding connecting to a particular WAP, and the user 1099 can be provided with any desired information such as whether a particular WAP is available or unavailable (according to the categorization being employed for the communication devoice 1010). In addition, this information provided to the user 1099 can be provided in a format that has been selected by the user 1099.

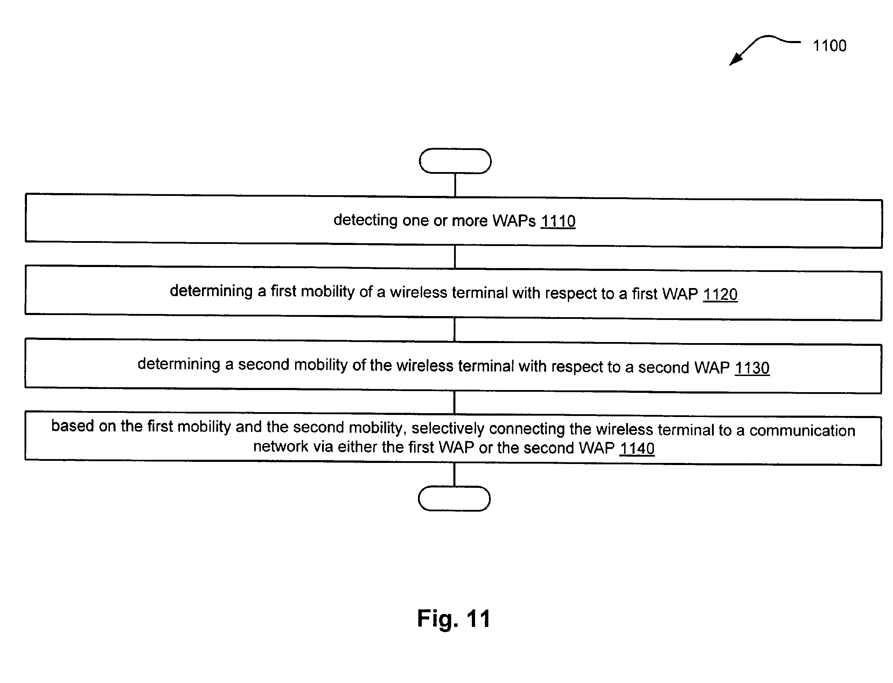

FIG. 11, FIG. 12, FIG. 13, FIG. 14, and FIG. 15 are diagrams showing embodiments of methods for selectively connecting a wireless terminal to a WAP.

Referring to the method 1100 of FIG. 11, the method 1100 begins by detecting one or more WAPs, as shown in a block 1110. In some wireless terminals, a radio is included that is operable to detect the existent of a plurality of WAPs, including WAPs operating according to different communication standards, protocols, etc. As shown in a block 1120, the method 1100 continues by determining a first mobility of a wireless terminal with respect to a first WAP. Then, the method 1100 continues by determining a second mobility of the wireless terminal with respect to a second WAP, as shown in a block 1130. Thereafter, based on the first mobility and the second mobility, the method 1100 operates by selectively connecting the wireless terminal to a communication network via either the first WAP or the second WAP, as shown in a block 1140.

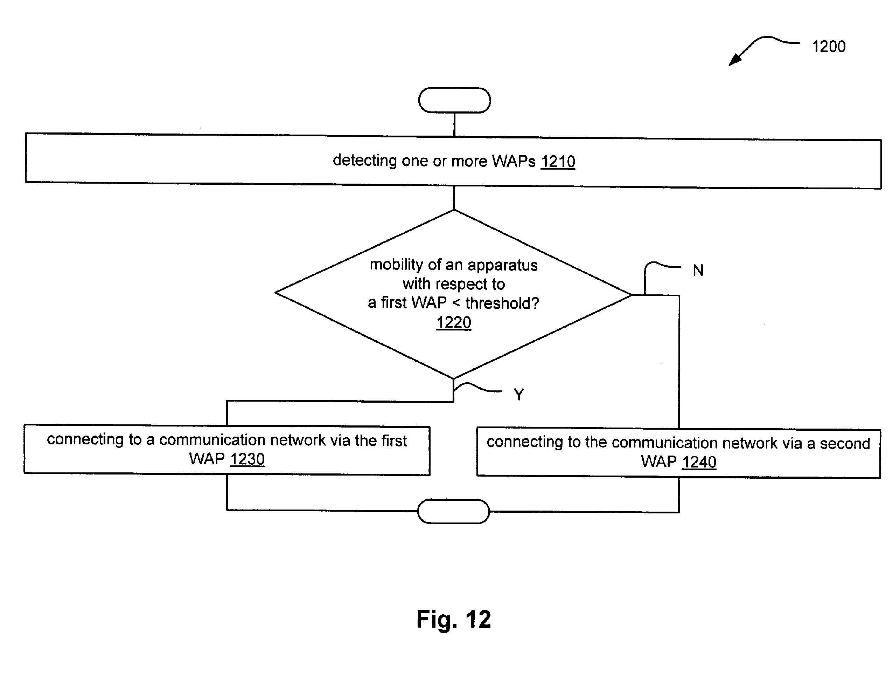

Referring to the method 1200 of FIG. 12, the method 1200 begins by detecting one or more WAPs, as shown in a block 1210. As shown in a decision block 1220, the method 1200 continues by determining whether a mobility of an apparatus with respect to a first WAP is less than a threshold. This threshold can be predetermined, programmed such as by a user, or adaptively determined in various embodiments. Then, if the parameter condition is met within the block 1220 (i.e., a yes is determined therein), the method 1200 continues by connecting to a communication network via the first WAP, as shown in a block 1230. Alternatively, if the parameter condition is not met within the block 1220 (i.e., a no is determined therein), the method 1200 continues by connecting to a communication network via a second WAP, as shown in a block 1240.

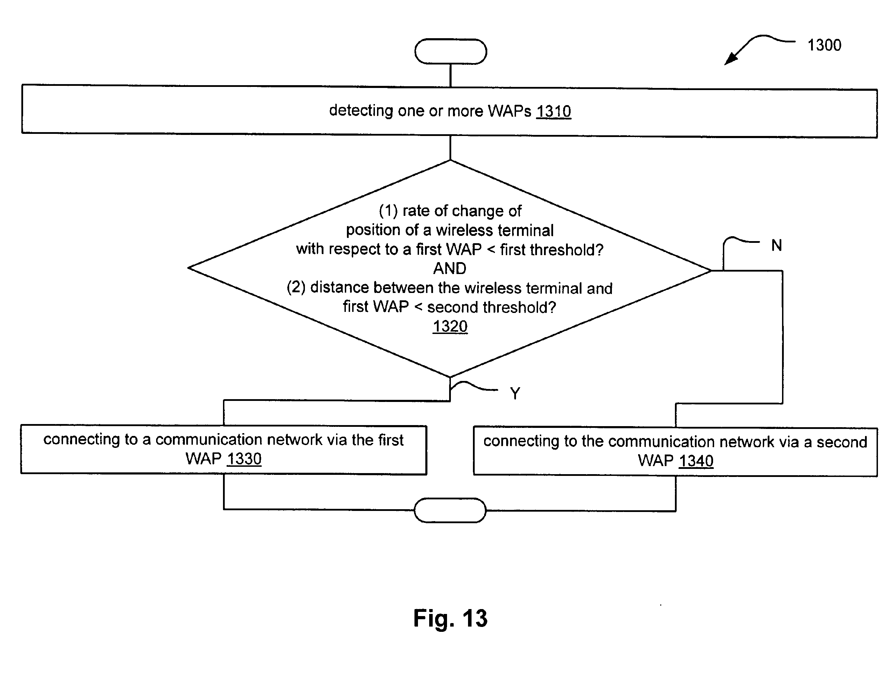

Referring to the method 1300 of FIG. 13, this method 1300 is somewhat analogous to the method 1200 of FIG. 12. However, within this embodiment, more than one parameter condition is employed in the decision making process regarding with which WAP to connect. It is also noted that additional parameter conditions may also be added to refine further this decision making process.

The method 1300 begins by detecting one or more WAPs, as shown in a block 1310. As shown in a decision block 1320, the method 1300 continues by determining two separate conditions: (1) whether a rate of change of position of a wireless terminal with respect to a first WAP is less than a first threshold, and (2) whether a distance between the wireless terminal and the first WAP is less thn a second threshold. Then, if both of these parameter conditions are met within the block 1320 (i.e., a yes is determined therein to both conditions), the method 1300 continues by connecting to a communication network via the first WAP, as shown in a block 1330. Alternatively, if even one of the parameter conditions is not met within the block 1320 (i.e., a no is determined therein), the method 1300 continues by connecting to a communication network via a second WAP, as shown in a block 1340.

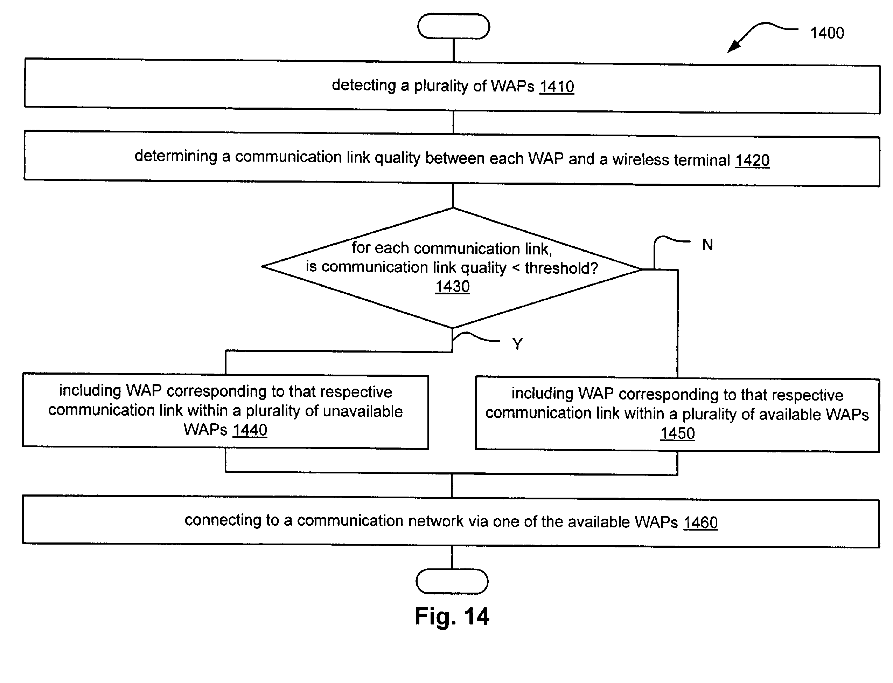

Referring to the method 1400 of FIG. 14, the method 1400 begins by detecting a plurality of WAPs, as shown in a block 1410. The method 1400 then continues by determining a communication link quality between each WAP and a wireless terminal, as shown in a block 1420. As shown in a decision block 1430, the method 1400 continues by determining, for each communication link, whether the communication link quality of that communication link is less than a threshold (which can be predetermined, programmed, or adaptively determined). Then, if the communication link quality of a given communication link is less than the threshold as determined in block 1430, then the method 1400 continues by including WAP corresponding to that respective communication link within a plurality of unavailable WAPs, as shown in a block 1440. Alternatively, if the communication link quality of a given communication link is greater than or equal than the threshold as determined in block 1440, then the method 1400 continues by including WAP corresponding to that respective communication link within a plurality of available WAPs, as shown in a block 1450. The method 1400 continues by connecting to a communication network via one of the available WAPs, as shown in a block 1460.

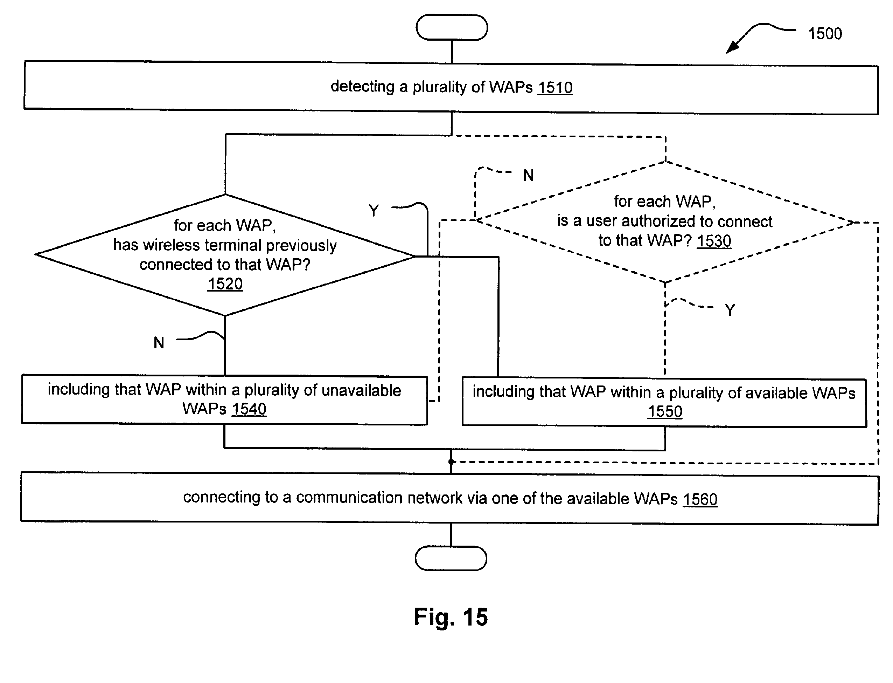

Referring to the method 1500 of FIG. 15, this method 1500 includes two separate parameter conditions that can be performed simultaneously (e.g., in parallel), or successively (e.g., one after the other).

Looking at one of these parameter conditions, the method 1500 begins by detecting a plurality of WAPs, as shown in a block 1510. As shown in a decision block 1520, the method 1500 continues by determining, for each WAP, whether a wireless terminal has previously connected to that WAP. This can be viewed as determining whether a particular WAP is included within a wireless terminal's history of connectivity. Then, if the wireless terminal has previously connected to a particular WAP (i.e., a yes is determined), then the method 1500 continues by including that WAP within a plurality of available WAPs, as shown in a block 1550. Alternatively, if the wireless terminal has not previously connected to that particular WAP (i.e., a no is determined), then the method 1500 continues by including that WAP within a plurality of unavailable WAPs, as shown in a block 1540. The method 1500 can then continue by connecting to a communication network via one of the available WAPs, as shown in a block 1560, or the method 1500 can determine whether the other of the parameter conditions has been met.

Looking at the other parameter condition, after the method 1500 has performed the detecting the plurality of WAPs, as shown in the block 1510, then, the method 1500 continues by determining, for each WAP, whether a user of a wireless terminal is authorized to connect to that WAP, as shown in a decision block 1530. If the user of the wireless terminal has authorization to connect to the particular WAP (i.e., a yes is determined), then the method 1500 continues by including that WAP within the plurality of available WAPs, as shown in the block 1550. Alternatively, if the user of the wireless terminal does not have authorization to connect to the particular WAP (i.e., a no is determined), then the method 1500 continues by including that WAP within the plurality of unavailable WAPs, as shown in the block 1540. The method 1500 continues by connecting to a communication network via one of the available WAPs, as shown in a block 1560.

It is noted that the characterization and categorization of any particular WAP that is detected can be updated at a later time. For example, some of the properties of a WAP can change over time, and an updating of the characterization and categorization of the WAPs can help provide for better decision making regarding with which WAP to connect.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A wireless terminal in a packet switched communication network, the packet switched communication network including a plurality of wireless access points (WAPs), the wireless terminal comprising:
a radio that:
detects the plurality of WAPs; and
connects to a communication network via at least one WAP within the plurality of WAPs; and wherein:
when a rate of change of position of the wireless terminal with respect to a first WAP within the plurality of WAPs is less than a threshold, the radio connects to the communication network via the first WAP; and
when the rate of change of position of the wireless terminal with respect to the first WAP within the plurality of WAPs is greater than the threshold, the radio connects to the communication network via a second WAP within the plurality of WAPs.

2. The wireless terminal of claim 1, wherein:
one WAP within the plurality of WAPs is a wireless local area network access point that is compatible with IEEE 802.11 standard or a WiMAX access point that is compatible with IEEE 802.16 standard.

3. The wireless terminal of claim 1, wherein:
the threshold is a first threshold; and
when the rate of change of position of the wireless terminal with respect to the first WAP within the plurality of WAPs is less than the first threshold and a distance between the wireless terminal and the first WAP is less than a second threshold, the radio connects to the communication network via the first WAP.

4. The wireless terminal of claim 1, wherein:
the threshold is a first threshold;
the radio determines a corresponding signal strength for signal transmission or signal reception via each communication link between the radio and each WAP within the plurality of WAPs;
the plurality of WAPs includes a plurality of unavailable WAPs and a plurality of available WAPs;
if a signal strength of a communication link between the radio and a corresponding WAP is less than a second threshold, then that corresponding WAP is included within the plurality of unavailable WAPs;
if a signal strength of a communication link between the radio and a corresponding WAP is greater than or equal to the second threshold, then that corresponding WAP is included within the plurality of available WAPs; and
among the plurality of unavailable WAPs and the plurality of available WAPs, the radio is enabled to connect to the communication network via only the plurality of available WAPs:

5. The wireless terminal of claim 1, wherein:
the rate of change of position of the wireless terminal with respect to the first WAP within the plurality of WAPs is a velocity or an acceleration.

6. A wireless terminal in a packet switched communication network, the packet switched communication network including a plurality of wireless access points (WAPs), the wireless terminal comprising:
a radio that:
detects the plurality of WAPs; and
connects to a communication network via at least one WAP within the plurality of WAPs; and wherein:
based on a first mobility of the wireless terminal with respect to a first WAP within the plurality of WAPs and a second mobility of the wireless terminal with respect to a second WAP within the plurality of WAPs, the radio selectively connects to the communication network via either the first WAP or the second WAP.

7. The wireless terminal of claim 6, wherein:
one WAP within the plurality of WAPs is a wireless local area network access point that is compatible with IEEE 802.11 standard or a WiMAX access point that is compatible with IEEE 802.16 standard.

8. A method performed by a wireless terminal in a packet switched communication network, the packet switched communication network including a plurality of wireless access points (WAPs), the method comprising:
detecting the plurality of WAPs;
determining a first mobility of the wireless terminal with respect to a first WAP within the plurality of WAPs;
determining a second mobility of the wireless terminal with respect to a second WAP within the plurality of WAPs; and
based on the first mobility and the second mobility, selectively connecting the wireless terminal to a communication network via either the first WAP or the second WAP.

9. The method of claim 8, wherein:
one WAP within the plurality of WAPs is a wireless local area network access point that is compatible with IEEE 802.11 standard or a WiMAX access point that is compatible with IEEE 802.16 standard.

10. The method of claim 8, wherein:
the first mobility is a first velocity of the wireless terminal with respect to the first WAP or a first acceleration of the wireless terminal with respect to the first WAP; and
the second mobility is a second velocity of the wireless terminal with respect to the second WAP or a second acceleration of the wireless terminal with respect to the second WAP.
